# EUROPEAN PATENT APPLICATION

(11) **EP 1 505 483 A1**
(43) Date of publication of application: **09.02.2005**
(21) Application number: 03102459.9
(22) Date of filing: 07.08.2003
(51) Int. Cl.: G06F 3/033, G06F 15/02

(54) **Method and means for browsing pages of information in a mobile device**

(71) Applicant: Myorigo OY, 90230 Oulu (FI)
(72) Inventor: Väänänen, Johannes, 90420 Oulu (FI)
(74) Representative: Savela, Antti-Jussi

(57) **Abstract**

The invention relates to a method (20, 30), device (40) and a memory unit (60) for ergonomically browsing pages of information in a mobile device. In the inventive method for changing the contents of at least a portion of a screen in a wireless device, each portion being associated with an information stack of pages of information in a defined order, the following steps are taken: a user identifies at least one restricted portion with an external pointer (200), the user performs a movement resembling the turning of a page with the said external pointer on the surface or very near the surface of an external screen (210), this movement is detected (220) and the contents in the said restricted portion are changed as response to user movement to the contents of another page in the information stack (230). The methods and arrangements of the invention allow the user to view documents from multipurpose mobile devices, such as mobile phones or PDA's in a book-like fashion.

## Description

### TECHNICAL FIELD OF INVENTION

Generally, the invention is in the field of mobile device user interfaces. The invention relates to a method, device and a memory unit for ergonomically browsing pages of information in a mobile device. Even more particularly the invention is directed towards a method and a device for turning pages in an information stack like pages in a book from the screen of a mobile device.

### BACKGROUND

Books have been used by man to convey written or graphical information throughout the centuries. Computerised devices have been used to convey large amounts of data and documents for only a few decades. The reading of electronic documents with mobile devices is still in its infancy, but is a rapidly growing and important field of technology.

Recently the concept of an electronic book has emerged. For example, US05739814 exhibits an electronic device for reading electronic information, with the characteristic that the device has a look and feel of a book to it. It is also possible to edit the documents in the aforementioned document. USRE037929 exhibits also an electronic device that simulates an ordinary paper based book in various aspects. These documents are cited as references in this application.

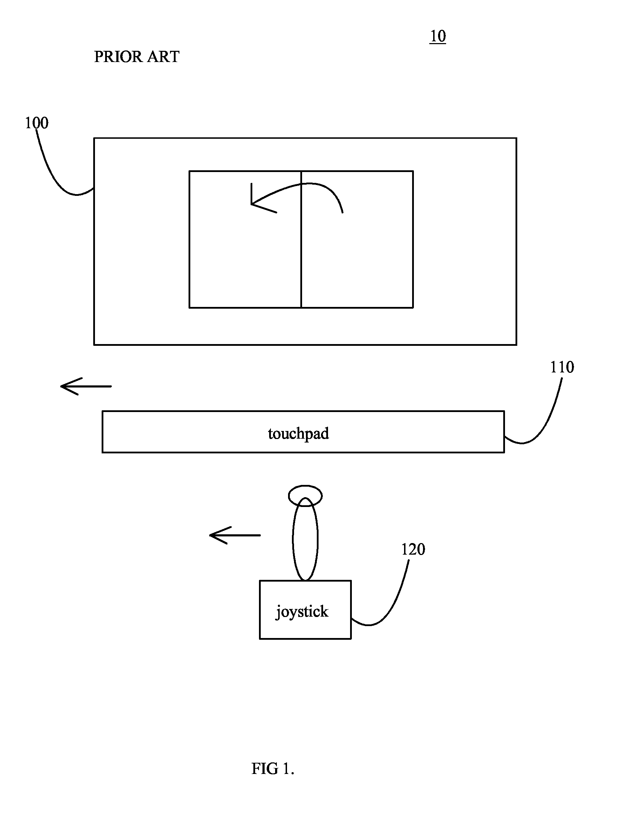

The prior art features also methods for browsing pages in electronic books. For example the publication US2302020687A1 features a method where pages in an electronic document may be turned by stroking an electronic touch pad or a joystick. This aspect of prior art is illustrated also in figure 1. As the touch pad is stroked to a direction or the joystick is turned to a direction the pages are turned to the same direction. This document is also cited here as reference.

The prior art has several disadvantages. If the electronic device is made with a look and feel of book, it is tedious to use it as a multipurpose device. The touch pad and joystick as presented in the prior art document viewing devices are externals that occupy extra space, are expensive to manufacture and have calibration problems. Most importantly, the prior art joystick and the touch pad are not capable of providing the look and feel of a book to the user.

"Haptic" is taken to mean the detection of sensory input such as touch, pressure or the like in this application, and physical feedback that is associated with the said sensory input.

### SUMMARY

The invention under study is directed towards a system and a method for providing a mobile device user interface for viewing documents that has a look and feel of a book in a multipurpose device. A further object of the invention is to present a system and a method for flipping pages on the screen of a mobile device with a finger or pointer, as if the screen, or a portion of it would be a book.

One aspect of the inventive device recognises the movement of the user's finger that is similar to the movement of turning a page in a book, and then upon recognition turns the page of the book. A further aspect of the invention includes pressure and/or optical detectors in the mobile station screen or in the proximity of the screen that are used for detecting user movements that resemble movements associated with the browsing of a normal paper based book.

One aspect of the invention allows the user to turn the pages of the electronic document to bookmark or index of the book that is stored in electronic format. Another aspect of the invention allows the user to edit the electronic document.

The invention has several advantages. The inventive method and system for browsing pages of an electronic document allows enhanced look and feel of book like features in a multipurpose portable device such as a mobile station, mobile phone, PDA (Personal Digital Assistant) or the like. There is no need for external or additional control peripherals such as joysticks, the electronic document may be situated anywhere on the display, and the user may touch the text itself, making the user more connected with the information he or she is viewing.

A method for changing the contents of at least one portion of a screen in a wireless device in accordance with the invention, each portion being associated with an information stack of pages of information in a defined order comprises the following steps:
- a user identifies at least one restricted portion with an external pointer,
- the user performs a movement resembling the turning of a page with the said external pointer on the surface or very near the surface of an external screen,
- the pointer movement is detected,
- the contents in the said restricted portion are changed as response to user movement to the contents of another page in the information stack.

An inventive wireless device for displaying information on a screen and changing the contents of at least one portion of a screen, each portion being associated with an information stack of pages of information in a defined order is characterised in that:
- the wireless device is arranged to display at least one restricted portion of a screen to the user,
- the wireless device is arranged to associate a dedicated user action with an external pointer with a restricted portion,
- the wireless device is arranged to identify a movement resembling the turning of a page with the said pointer on the surface or very near the surface of a screen,
- the wireless device is arranged to change the contents in the said restricted portion to the contents of another page in the information stack.

An inventive memory unit comprises a software program product, for displaying information on a screen and changing the contents of at least a portion of a screen and is characterised in that,
- the software program product is arranged to display at least one page of an information stack of pages on at least one screen to the user,
- the software program product and/or user input recognition software therein is arranged to associate a dedicated user action with an external pointer with a page of information,
- the software program product and/or sensory device driver software therein is arranged to identify a movement resembling the turning of a page with the said pointer on the surface or very near the surface of a screen,
- the software program product is arranged to change the contents of the page on the screen to the contents of another page in the information stack.

In addition and with reference to the aforementioned advantage accruing embodiments, the best mode of the invention is considered to be the provision of electronic book like features for document viewing in a multipurpose mobile device.

### BRIEF DESCRIPTION OF THE DRAWINGS

In the following the invention will be described in greater detail with reference to exemplary embodiments in accordance with the accompanying drawings, in which
Figure 1 demonstrates a prior art method for providing book-like features to a document viewing device.
Figure 2 demonstrates an embodiment 20 of the method for ergonomically turning a page as a flow diagram in accordance with the invention.
Figure 3 demonstrates a more elaborate embodiment 30 of the method for ergonomically turning a page as a flow diagram in accordance with the invention.
Figure 4 demonstrates an embodiment 40 of the mobile device in accordance with the invention as a block diagram.
Figure 5A demonstrates a use scenario of the mobile device related to page turning in accordance with the invention 50 as two time dependent block diagrams.
Figure 5B demonstrates a use scenario of the mobile device related to page tearing in accordance with the invention 51 as two time dependent block diagrams.
Figure 5C demonstrates a use scenario of the mobile device related to page pasting in accordance with the invention 52 as two time dependent block diagrams.
Figure 6 demonstrates an exemplary embodiment 60 of the functional software of the mobile device in accordance with the invention as a block diagram.
Some of the embodiments are described in the dependent claims.

### DETAILED DESCRIPTION OF EMBODIMENTS

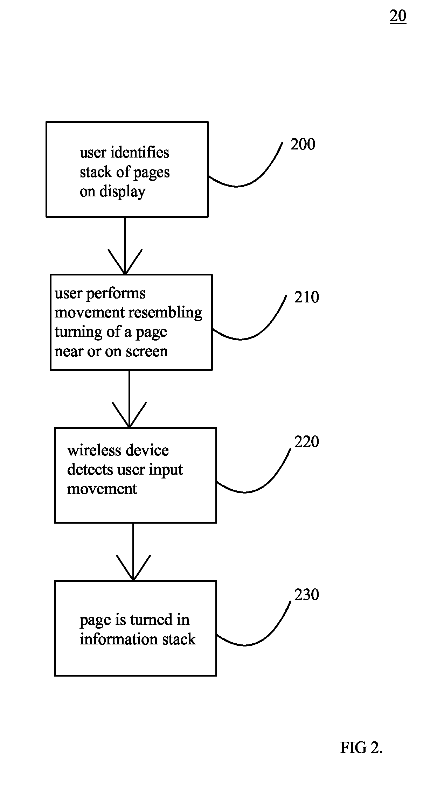

Figure 2 exhibits the method of the invention as a flow diagram, and in phase 200 the user recognises an information stack of pages on the display. Typically only one or two pages are visible, or there may also be portions of other pages visible. In step 210 the user performs a movement resembling the turning of a page of a conventional book near the screen, or touching the screen. Optical and/or sensory detectors, such as pressure, sound or touch detectors are associated with the screen in order to recognise movements of the user's pointer, which may be a finger, a pen, stick or any mechanical or optical pointer.

In phase 220 the wireless device detects the user input that was given by movement of the pointer. In some embodiments the mobile station uses user input recognition software for determining whether there was an intended user input and which it was, in embodiments where there are several motion-defined inputs.

In some embodiments the pressure or touch caused by the pointer on the screen is detected, and the type of forces it exerts on the screen in order to identify the movement. In other embodiments, the sound of the sweeping pointer is detected and analysed whether this corresponds to a movement of turning a page. In other embodiments where the motion is recognised optically, the opacity or reflectivity caused by the movement in light may be used to distinguish whether it is a movement that signifies the turning of a page. In phase 230 the page is turned in the electronic document, provided the input was deemed to indicate the turning of a page.

In some embodiments the turning of the page or the provision and detection of input is associated with some form of feedback. For example a light may be blinked as optical feedback to a successful user input. In other embodiments, haptic feedback may be provided to the user: once the user touches the screen to perform the movement that is intended to manipulate the pages, a vibrating element on or in the screen may be used to provide a flip, push or any other form of mechanical feedback to the user's pointer. Quite clearly also any combination of mechanical or optical feedback or an audible sound is also possibly used to provide feedback.

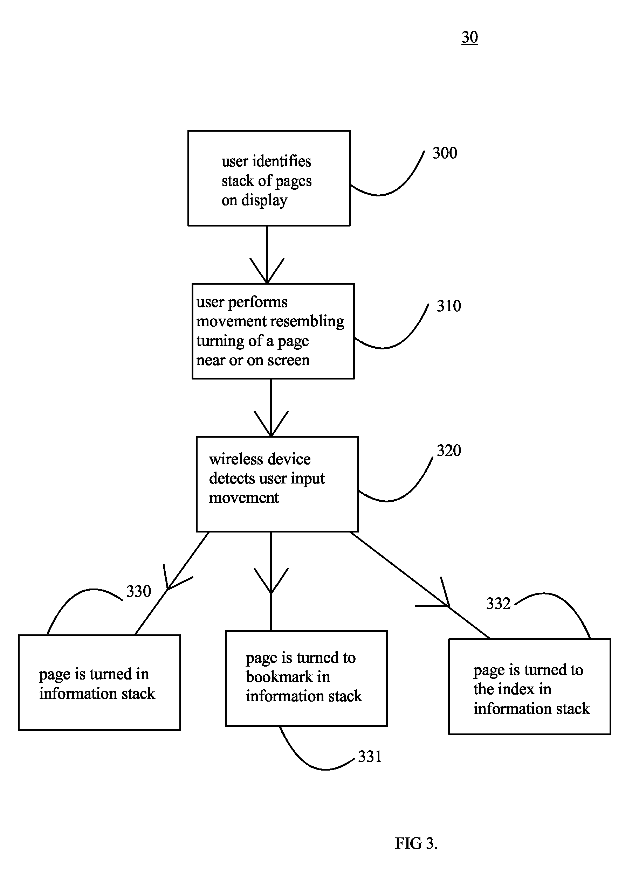

Figure 3 presents a more elaborate embodiment of turning a page in the electronic document that simulates a book. In phase 300 the user identifies a stack of information pages on the display. In several embodiments there may be more than one such stack of pages, displayed on the display. In phase 310 user performs a movement resembling the turning of a page of a conventional book near the screen, or touching the screen. In some embodiments where there are several stacks of pages on display on one screen the user may flick the pages of a particular page stack by performing the movement on that particular portion of the screen where the information stack that is to be browsed is located.

In phase 320 the wireless device detects the user input that was given by movement of the pointer. When there are motion defined inputs, the mobile station needs to resolve the movements of the user, i.e. to determine whether there was an input and which input it was and for which information stack was it intended for, and operate the screen and the display of information stacks accordingly. For example, one movement to a specific portion of the display or on the page may indicate the turn of page to the next page 330, another type of movement or a movement at another position on the display or on the page may indicate a turn to a bookmark 331, and again another type or another location on the screen or on the page may indicate a turn to the index 332 of the information stack. Likewise specific movements can be used to turn to a specific page number or an item in the index.

Quite clearly different movements signifying different actions may also be associated with different feedbacks, sound, haptical and/or optical feedbacks for example.

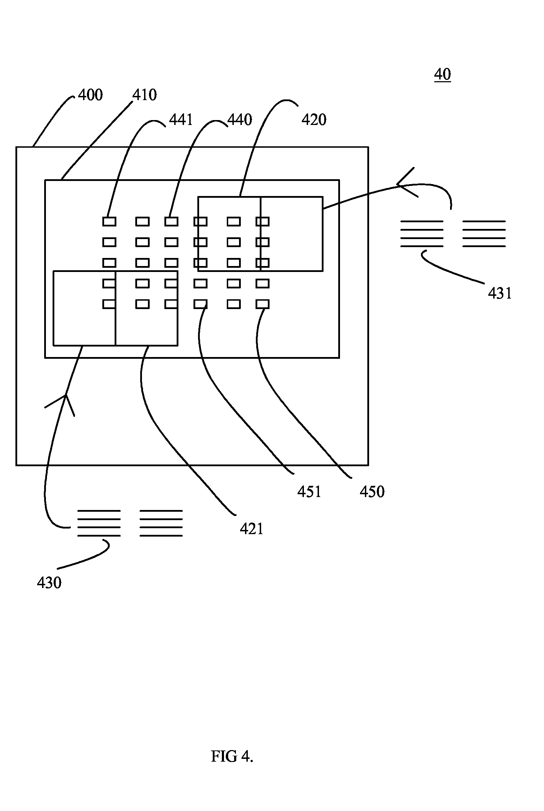

Figure 4 presents a schematic of the mobile device in accordance with the invention. The information stacks of pages 430, 431 are positioned in different locations 420, 421 on the screen 410 of the device 400. The number of pages in each information stack may range within the available memory of the device or its memory distribution ability with other computers, such as network servers. In some embodiments the areas 420, 421 occupied by different stacks 430, 431 may be very different in size. In some preferable embodiments, the size of a particular stack of information may be controlled by the user, in a similar fashion to windows of certain applications in a computer.

In some embodiments the screen 410, or some part of it, for example its lens, or its proximity contains optical, pressure, sound and/or touch detectors 440, 441, which may be dispersed along the area of the screen 410, as a grid or randomly. In some embodiments the screen 410, some part of it, its lens or its proximity may also contain feedback elements 450, 451 which may be used to provide optical, pressure and/or sound feedback in response to the movements the user performs with his pointer on or in proximity of the screen 410. In some embodiments a detector 440, 441 is a touch pad, or at least one detector 440, 441 and at least one feedback element 540, 541 may be integrated into one element or touch pad.

The mobile station may be a GSM-, H323-, HTTP-, GSM-data, IP-RAN-, UMTS-, WAP-, Teldesic-, Inmarsat-, Iridium-, GPRS-, CDMA-data-, WCDMA-data-, HTTP-, H323-, SMS-, MMS-, email- LAN-, TCP/IP-, imode-, Globalstar- and/or WLAN- compliant mobile station in some embodiments.

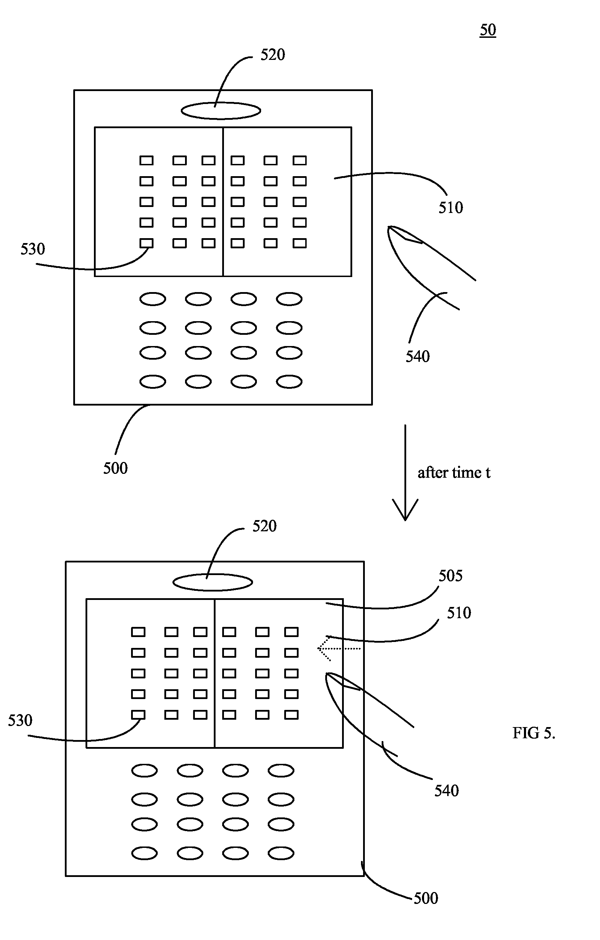

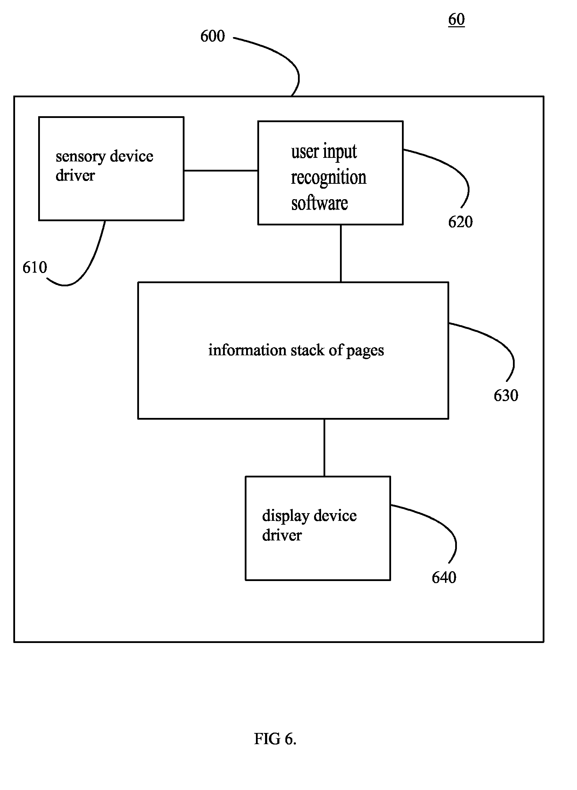

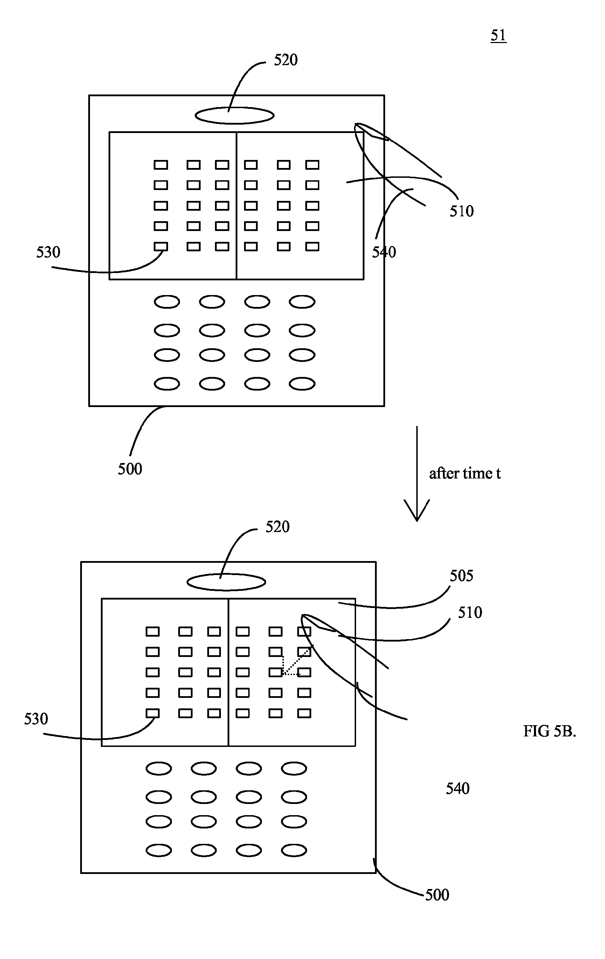

Figure 5A demonstrates a use scenario of the mobile device in accordance with the invention. The user uses a pointer, such as his finger 540 to flip the page in the information stack 510. The flip is typically a light sweeping touch to the edge of the page. The mobile device 500 recognises the incoming pointer with at least one optical sensor 520 and/or at last one pressure sensor 530. In some preferable embodiments there is a defined or dispersed grid of pressure detectors 530, which may also be haptical, i.e. equipped with feedback abilities, distributed over the area of the screen 505. The location resolution of the detection system is typically enhanced by the addition of detector density on the screen.

Figure 5B shows a different use scenario of the inventive user interface. In this embodiment a page is "torn", i.e. committed to memory from the document for further pasting. The dedicated user action is typically a tap on the corner of the page and then a following sweep, just as if the user would grab the corner of the page with his fingers and then tear the page from the book. This user movement commits the data in the page to the memory of the mobile device.

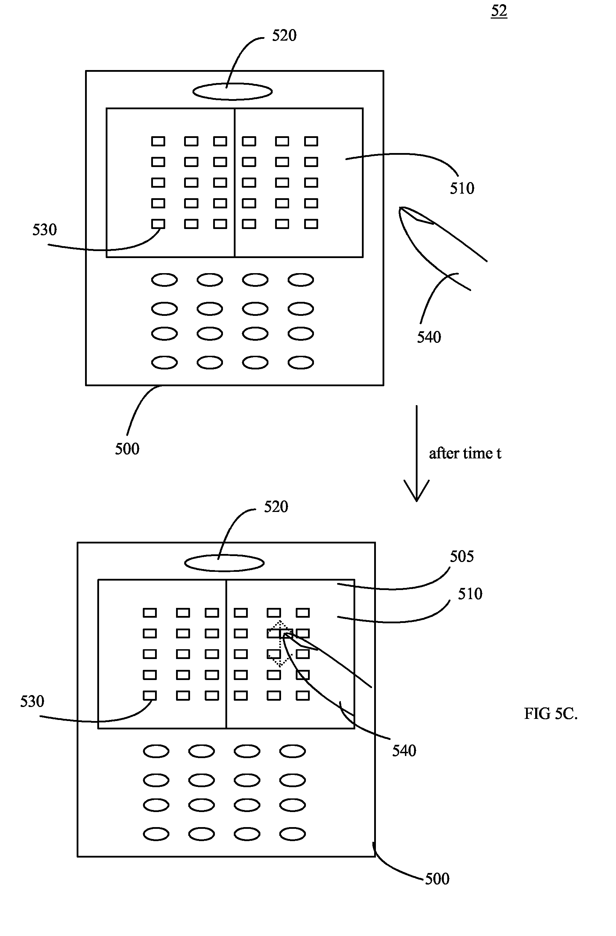

Figure 5C shows a further different use scenario of the inventive user interface. In this use embodiment the user pastes a page or some data from the memory to the open document. Typically the user action associated with pasting is a gentle tuck where the pointer 540 is moved back and forth on the document to which the data is pasted. The tucking of data is just as if the user would be tucking a page into a folder for storage. This user movement commits data from the memory of the mobile device to the open document on the mobile device.

Figure 6 exhibits an embodiment of a memory unit, featuring mobile station software in accordance with the invention as a block diagram. The software system needed to realise the invention will comprise in some embodiments separate device drivers 610 for the sensory devices associated with the screen, such as drivers for the optical and/or pressure detectors. User input recognition software 620 is typically used to analyse the signals that the sensory devices have detected in order to determine which inputs were given by the user.

The display device driver 640 and the actual information stack of pages are then manipulated according to the determined user input, which may be a flip to the next page, to end of the book, to the index or the like. It is also clear that any number of pages may be displayed at once, for example only one page occupying the entire screen, two consecutive pages next to each other like opening a page in a paper based book, or several pages of several information stacks.

It is clear that in addition to browsing the data with the outlined invention for reading it is possible to browse the data in a simi lar fashion for editing purposes, such as writing or addition of graphics, or the like. Quite clearly the inventive method and device may be used to identify user movements corresponding to editing operations, and provide relevant feedback in response to the editing operations.

The invention has been explained above with reference to the aforementioned embodiments and several commercial and industrial advantages have been demonstrated. The methods and arrangements of the invention allow the user to view documents from multipurpose mobile devices, such as mobile phones or PDA's in a booklike fashion. No external joysticks or touchpads are needed as the user may simply flick pages from the screen of the mobile station thus making the device smaller and releasing resources for other functions. Above all, the invention makes the browsing of information pages pleasant for the user of a mobile device, by providing a user interface with a look and feel of a book.

The invention has been explained above with reference to the aforementioned embodiments. However, it is clear that the invention is not only restricted to these embodiments, but comprises all possible embodiments within the spirit and scope of the inventive thought and the following patent claims.

### REFERENCES

US05739814, Information storage system and book device for providing information in response to user specification, Makoto Ohara, Shinichirou Sugiura.
USRE037929, Microprocessor based simulated book, Emilio A. Fernandez.
US2302020687A1, Document viewing device, Anthony Sowden, Russell David Gallop.

## Claims

1. A method for changing the contents of at least one portion of a screen in a wireless device, each portion being associated with an information stack of pages of information in a defined order, comprising the following steps:
- a user identifies at least one restricted portion with an external pointer (200),
- the user performs a movement resembling the turning of a page with the said external pointer on the surface or very near the surface of an external screen (210),
- the pointer movement is detected (220),
- the contents in the said restricted portion are changed as response to user movement to the contents of another page in the information stack (230).

2. A method as claimed in claim 1, **characterised in that,** the said pointer (540) is a finger, the hand, or any other body part of the user, and/or an artificial electronic, optical, or mechanic pointer.

3. A method as claimed in claim 1, **characterised in that,** the screen is associated with optical, pressure, touch and/or sound sensors (440, 441, 540).

4. A method as claimed in claim 1, **characterised in that,** the user identifies the restricted portion optically, by touch, sound and/or pressure and/or the said movement resembling the turning of the page is recognised optically, by touch, sound and/or by pressure.

5. A method as claimed in claim 1, **characterised in that,** the screen (410, 510) is associated with feedback elements (450, 451) that provide optical, sound and/or haptical feedback in response to user pointer movements.

6. A method as claimed in claim 1, **characterised in that,** a dedicated user pointer movement may be used to turn to a bookmark (331), to a page of specific number, and/or an item in the index or the index (332) of the information stack.

7. A method as claimed in claim 1, **characterised in that,** a dedicated user pointer movement (51) resembling the tearing of a page may be used to cut or copy the data of that particular page to wireless device memory.

8. A method as claimed in claim 1, **characterised in that,** a dedicated user pointer movement (52) resembling the adding of a page to a folder may be used to paste the data of a particular page from wireless device memory to a particular information stack.

9. A method as claimed in claim 1, **characterised in that**, one restricted portion occupies the entire display.

10. A wireless device for displaying information on a screen and changing the contents of at least one portion of a screen, each portion being associated with an information stack of pages of information in a defined order, **characterised in that**:
- the wireless device (400, 500) is arranged to display at least one restricted portion of a screen (410, 510) to the user,
- the wireless device is arranged to associate a dedicated user action with an external pointer with a restricted portion (420, 421),
- the wireless device is arranged to identify a movement resembling the turning of a page with the said pointer (540) on the surface or very near the surface of a screen,
- the wireless device is arranged to change the contents in the said restricted portion to the contents of another page in the information stack (430, 431).

11. A wireless device as claimed in claim 10, **characterised in that,** the said pointer (540) is a finger, the hand, or any other body part of the user, and/or an artificial electronic, optical, or mechanic pointer.

12. A wireless device as claimed in claim 10, **characterised in that**, the screen is associated with optical, sound, touch and/or pressure sensors (440, 441,530).

13. A wireless device as claimed in claim 10, **characterised in that,** the restricted portion identified (420, 421) by the user is determined optically, by touch, sound and/or pressure and/or the said movement resembling the turning of the page is recognised optically, by sound, touch and/or by pressure.

14. A wireless device as claimed in claim 10, **characterised in that,** the screen (410, 510) is associated with feedback elements (450, 451) that provide optical, sound and/or haptical feedback in response to user pointer movements.

15. A wireless device as claimed in claim 10, **characterised in that,** a dedicated user pointer movement is arranged to turn to a bookmark (331), to a page of specific number, and/or an item in the index or the index (332) of the information stack.

16. A wireless device as claimed in claim 10, **characterised in that,** a dedicated user pointer movement (51) resembling the tearing of a page is arranged to cut or copy the data of that particular page to wireless device memory.

17. A wireless device as claimed in claim 10, **characterised in that,** a dedicated user pointer movement (52) resembling the adding of a page to a folder is arranged to paste the data of a particular page from wireless device memory to a particular information stack.

18. A wireless device as claimed in claim 10, **characterised in that**, one restricted portion occupies the entire display.

19. A wireless device as claimed in claim 10, **characterised in that,** wireless device is a GSM-, H323-, HTTP-, GSM-data, IP -RAN-, UMTS-, WAP-, Teldesic-, Inmarsat-, Iridium-, GPRS-, CDMA-data-, WCDMA-data-, HTTP-, H323-, SMS-, MMS-, email- LAN -, TCP/IP-, imode-, Globalstar- and/or WLAN- compliant mobile station.

20. A memory unit, comprising a software program product, for displaying information on a screen and changing the contents of at least a portion of a screen, **characterised in that**,
- the software program product is arranged to display at least one page of an information stack of pages (630) on at least one screen to the user,
- the software program product and/or user input recognition software (620) therein is arranged to associate a dedicated user action with an external pointer with a page of information,
- the software program product and/or sensory device driver software (610) therein is arranged to identify a movement resembling the turning of a page with the said pointer on the surface or very near the surface of a screen,
- the software program product is arranged to change the contents of the page on the screen to the contents of another page in the information stack.

21. A memory unit as claimed in claim 20, **characterised in that**, the said pointer (540) is a finger, the hand, or any other body part of the user, and/or an artificial electronic, optic, or mechanic pointer.

22. A memory unit as claimed in claim 20, **characterised in that**, the software (610, 620, 630, 640) is arranged to associate optical, touch, sound and/or pressure sensory data with user pointer movement.

23. A memory unit as claimed in claim 20, **characterised in that**, the page or information stack identified by the user is determined optically, by touch, sound and/or pressure and/or the said movement resembling the turning of the page is recognised optically, by touch, sound and/or pressure.

24. A memory unit as claimed in claim 20, **characterised in that**, the software program product and/or sensory device driver software (610) therein is ranged to initiate optical, sound and/or haptical feedback in response to pointer movements.

25. A memory unit as claimed in claim 20, **characterised in that**, the identification of a dedicated user pointer movement is arranged to turn the display to a bookmark (331), to a page of specific number, and/or an item in the index or the index (332) of the information stack (630).

26. A memory unit as claimed in claim 20, **characterised in that**, the identification of a dedicated user pointer movement (51) resembling the tearing of a page is arranged to cut or copy the data of that particular page to memory.

27. A memory unit as claimed in claim 20, **characterised in that**, the identification of a dedicated user pointer movement (52) resembling the adding of a page to a folder is arranged to paste the data of a particular page from memory to a particular information stack.

28. A memory unit as claimed in claim 20, **characterised in that**, one page occupies the entire display or a restricted portion of a display.

29. A memory unit as claimed in claim 20, **characterised in that**, the memory unit is arranged to be installed to a GSM-, H323-, HTTP-, GSM-data, IP-RAN-, UMTS-, WAP-, Teldesic-, Inmarsat-, Iridium-, GPRS-, CDMA-data-, WCDMA-data-, HTTP-, H323-, SMS-, MMS-, email- LAN-, TCP/IP-, imode-, Globalstar- and/or WLAN- compliant mobile station.
